(19) **Europäisches Patentamt**

**European Patent Office**

**Office européen des brevets**

(11) **EP 0 358 496 B2**

(12) **NEW EUROPEAN PATENT SPECIFICATION**

(45) Date of publication and mention
of the opposition decision:
**30.05.2001  Bulletin 2001/22**

(45) Mention of the grant of the patent:
**22.02.1995  Bulletin 1995/08**

(51) Int Cl.[7]: **G01M 1/02**

(21) Application number: **89309050.6**

(22) Date of filing: **06.09.1989**

(54) **Wheel measuring apparatus and wheel balancer incorporating same**

Radauswuchtvorrichtung mit Distanzmessvorrichtung

Dispositif d'équilibrage de roues comportant un dispositif de mesure de distances

(84) Designated Contracting States:
**AT BE CH DE ES FR GB GR IT LI LU NL SE**

(30) Priority: **07.09.1988  IE  269488**
**09.09.1988  IE  273488**

(43) Date of publication of application:
**14.03.1990  Bulletin 1990/11**

(73) Proprietor: **INTERBALCO AG**
**CH-6300 Zug (CH)**

(72) Inventors:
• **Quinlan, Michael Martin**
**Cahercoulish County Limerick (IE)**
• **Jackson, Bernard**
**Los Gatos California (US)**
• **Pacey, Gordon Cameron**
**Watsonville California 95076 (US)**
• **Borner, Willy**
**Cupertino California 95014 (US)**
• **O'Sullivan, Brendan**
**Castletroy County Limerick (IE)**
• **Kreft, Keith Albert**
**Cupertino California 95014 (US)**

(74) Representative: **Gorman, Francis Fergus et al**
**F. F. Gorman & Co.**
**54, Merrion Square**
**Dublin 2 (IE)**

(56) References cited:
**DE-A- 3 101 843**      **FR-A- 2 323 139**
**GB-A- 2 139 772**      **IT-A- 1 215 026**
**US-A- 3 714 016**      **US-A- 3 741 016**

EP 0 358 496 B2

## Description

The present invention relates to wheel balacing apparatus and to a method for determining the radius of a balance weight receiving location of a wheel from the rotational axis of the wheel, and the distance of the balance weight receiving location from a reference plane which extends transversely of the rotational axis of the wheel.

In this specification, the term "vehicle wheel" means a wheel of the type having a hub and a tyre mounted on the hub. In general, the hub of such vehicle wheels would be of metal, although not necessarily. Spaced apart side walls extend radially outwardly from a hoop and terminate in a rim. The hoop and side walls form an annular recess for engaging the tyre. For convenience, the side walls are referred to as an inner side wall and an outer side wall. The inner side wall is the side wall which in normal use faces inwardly of the vehicle, while the outer side wall faces outwardly of the vehicle. A central plate or spokes is provided within the hoop, and with the hoop form a hub well. The hoop defines the periphery of the well. Such wheels are balanced by attaching one or more balance weights to appropriate balance weight receiving locations. In general, the balance weight locations are provided along the hub rim on the inside and/or outside of the wheel. Such weights attached to the hub rim abut the side wall of the hub adjacent the rim. Alternatively, balance weight receiving locations may be provided at the well periphery and such weights may be secured, for example, by adhesive to the hoop of the hub forming the hub well periphery. Needless to say, it will be appreciated that the apparatus of the invention is not limited to determining parameters of characteristics of such wheels.

Wheel balancing apparatus will be well known to those skilled in the art. Briefly, such wheel balancing apparatus, normally referred to as wheel balancers, comprise a main housing within which is rotatably mounted a wheel support shaft. A wheel to be balanced is mounted fast on the support shaft, which is then rotated. The support shaft may be rotated by a drive motor, or alternatively by hand, depending on the particular type of balancing apparatus. Transducers are provided associated with the support shaft and mountings of the shaft for sensing stresses and strains in the shaft and mountings for in turn determining the out of balance moment of the wheel and the angle through which it acts.

In general, wheel balancers are microprocessor controlled, and they present the data necessary for balancing the wheel on a visual display. Usually the data displayed is the size of the balance weight required to correct the wheel imbalance and the angular position at which it should be mounted on the rim of the hub of the vehicle wheel, where the balance weight is to be hub mounted. Normally, wheel balancers give this information for the inside and outside of the hub rim. So that the size of weight required to correct the imbalance can be correctly determined, it is necessary for the peripheral diameter of the hub rim to be inputted into the microprocessor. It will be readily appreciated by those skilled in the art that the greater the hub rim diameter, the smaller the weight necessary to correct a given imbalance. Further, in most cases, it is necessary to know the distance of either or both the inside and outside side walls of the hub adjacent the rim from a reference plane of the balancer to enable the values of the inner and outer weights to be determined. In general, the distance of the inside side wall from the reference plane and the. width of the hub across the side walls adjacent the hub rim is required. Thus, it is necessary for an operator of the wheel balancer to input, generally through a keyboard or by setting programming knobs, the peripheral diameter of the hub rim which is being balanced and the width of the hub across the side walls adjacent the hub rim, and the distance of the inside side wall from the reference plane. Needless to say, where the balance weights are to be affixed to the hub at other locations besides the rim, the radius of these locations and their distances from the reference plane must likewise be entered into the balancer.

Unfortunately, this presents a considerable number of problems, the most serious of which is the possibility of the operator entering the wrong values of these characteristics of the wheel, and of the wheel relative to the wheel balancer. Should a wrong rim diameter be entered, it will be appreciated that while the angular position at which the weight is to be attached, in general, will not be affected, the weight value displayed by the wheel balancer will be incorrect. This, accordingly, will lead to an ill-balanced wheel, which indeed may exhibit imbalance characteristics worse than before it was allegedly balanced. This, therefore, is undesirable. Similarly, more serious difficulties arise if an incorrect value of the other characteristics are entered. In these cases, even the angular positions could be affected.

Attempts to overcome these problems have been made, however, in general, these attempts suffer from a number of disadvantages. In general, such attempts have involved providing a wheel balancer with a device mounted on the wheel balancer to enable the radius of the hub rim and the width of the hub adjacent the rim as well as the distance of the inside and outside side walls of the hub adjacent the rim from a reference plane of the wheel balancer to be entered automatically in the wheel balancer. In general, such devices comprise a feeler member which is mounted on the housing of the wheel balancer and is movable so that an end of the feeler member engages the hub rim. A potentiometer or potentiometers on the feeler member transmit an electrical signal proportional to the distance moved by the feeler member to suitable electronic circuitry. The circuitry computes the rim radius and width as well as distance from the reference plane from the transmitted signals.

These devices have, in general, suffered from disadvantages. In particular, they do not eliminate operator error, and furthermore, they are relatively labour intensive. It is believed that one of the main reasons for these disadvantages is the fact that the feeler member must accurately engage the inside and/or outside rim of the hub in order for the necessary dimensions to be accurately computed by the electronic circuitry. Needless to say, if the feeler member does not correctly engage the hub rim, the signals transmitted by the potentiometer will be incorrect. In practice, in use, it has been found that it is quite difficult for an operator of a wheel balancer to correctly locate the feeler member on the hub rim. In many cases, the inside rim may be relatively inaccessible to an operator due to the construction of the housing of the wheel balancer. Dirt on the hub rim or a slightly damaged hub rim also affects the accuracy of the results. Further, hub rims may be provided with a number of steps, and the operator may engage one of the steps adjacent the hub rim rather than the actual hub rim itself. A further problem with these devices is the fact that because they are essentially mechanically operated, they can wear relatively easily, thus causing backlash, which in turn leads to inaccurate results.

Typical examples of wheel balancers with devices for automatically inputting the hub rim radius and width and the distance of the rim from a reference plane are disclosed in British Patent Specification No. 2,130,386, U.S. Patent Specification No. 3,741,016 and British Patent Specification No. 2,139,772.

The wheel balancer disclosed is British Patent Specification No. 2,130,386 comprises a device for determining the radius of the inner hub rim only and its distance from a reference plane. The device comprises a feeler member, one end of which is adapted for engaging the inner hub rim, and the other end is mounted on a shaft rotatable in mountings mounted on the wheel balancer housing. The shaft is mounted parallel to the rotational axis of the wheel support shaft and is also slidable longitudinally in the rotatable mountings. The feeler member and shaft are mold outwardly of the housing towards the wheel and the feeler member and shaft are pivoted until the feeler member engages the inner rim of the wheel. A potentiometer is connected to the shaft to monitor the longitudinal distance moved by the shaft when the feeler member is being brought into engagement with the hub rim to determine the distance of the hub rim from the reference plane and a second potentiometer is connected to the shaft to monitor the angular rotation of the shaft caused by pivoting the feeler member and shaft relative to the mountings to engage the rim. Signals from the two potentiometers are transmitted to suitable electronic circuitry for computing the radius of the inner rim and its distance from a reference plane.

U.S. Patent Specification No. 3,741,016 discloses a wheel balancer with a device for determining the radius of the inner hub rim of the wheel and its distance from a reference plane which is substantially similar to the device of British Patent Specification No. 2,130,386. However, in the case of the device of the U. S. specification, an additional feeler member is provided for determining the distance of the outer hub rim of the wheel from the reference plane so that the width of the hub adjacent the rim may be computed.

British Patent Specification No. 2,139,772 discloses a wheel balancer with a device for determining the radius and width of a hub rim. This device operates on a substantially similar principle to the device of British Patent Specification No. 2,130,386 with the exception that the shaft on which the feeler member is mounted is arranged in such a way that the shaft and feeler member may be moved outwardly of the wheel so that the feeler member is engagable with both the inner and outer hub rims for determining the width of the hub adjacent the rim as well as the radius of the rim.

However, in all cases, these devices require the use of a feeler member which must be positively and accurately engaged on the wheel rim. Thus, it will be appreciated by those skilled in the art that all these devices suffer from the disadvantages already discussed. Italian Patent Specification No. 1,215,026 discloses a wheel balancer which also includes a device for inputting the hub rim radius and the distances of the hub rims from a reference plane. Ultrasonic transducers are provided on each side of a wheel for detecting the respective wheel rims.

There is therefore a need for a wheel balancer which comprises an apparatus and method for determining the radius of one or more balance weight receiving locations of a vehicle wheel and for determining the distance of each balance weight receiving location from a reference plane. In particular, there is a need for a wheel balancer which comprises an apparatus and method for determining the radius of the rim of a hub of a wheel and for determining the distance of a side wall of the hub adjacent the rim from a reference plane.

The invention overcomes the problems of prior art devices by virtue of the fact that the invention provides wheel balancing apparatus of the type comprising a housing, a receiving means comprising a wheel support shaft rotatably mounted in the housing for receiving a wheel to be balanced, and defining the rotational axis of the wheel, a computing means for determining the imbalance of the wheel, and a sensing means for detecting the wheel and a balance weight receiving location, the sensing means being mounted on a mounting means, the mounting means being movable relative to the housing, wherein the sensing means is adapted to transmit and receive a signal for detecting the wheel and the balance weight receiving location, the sensing means being mounted on the mounting means for transmitting the signal towards a radial side face of the wheel from a predetermined position relative to the mounting means, and the mounting means is constrained to move in a predetermined path relative to the housing so that on movement of the mounting means relative to the housing the signal of the sensing means moves over portion of the radial side face of the wheel, a detecting means for detecting the position of the mounting means relative to the housing is provided, the computing means comprises a storing means for storing output signals received from the sensing means which correspond to distances of the radial side face of the wheel from a reference plane which extends transversely of the rotational axis against corresponding output signals received from the detecting means at predetermined intervals on movement of the mounting means, the computing means comprises a means for storing reference parameters of reference wheels, and a means for computing corresponding parameters of the wheel from the output signals from the sensing means and the detecting means stored in the storing means, and a means for comparing the computed parameters of the wheel with the reference parameters of the reference wheels for determining the type of wheel the wheel is, and for determining from the reference parameters the radial distance of the balance weight receiving location from the rotational axis, and the computing means computing from the output signals received from the sensing means and stored in the storing means the distance of the balance weight receiving location from the reference plane, the computed values of the radial distance and the distance from the reference plane being used by the computing means in computing the size of the balance weights.

The advantages of the invention are many.

The advantage of this feature of the invention is that the apparatus permits the radius and distance of the balance weight receiving location to be inputted directly into the wheel balancer without the need for human intervention, thereby virtually eliminating the possibility of error occuring, which has been a feature of apparatus known heretofore, where an operator had to manually key in or otherwise enter the radius and distance from a reference plane of the balance weight receiving location, and a further advantage of this feature of the invention is that it considerably reduces the labour content required to operate a wheel balancer and also the skill required to operate a wheel balancer.

A further advantage of the invention is that it provides apparatus which is relatively easy to manufacture and use.

In one embodiment of the invention, a pair of sensing means are mounted on the mounting means so that on movement of the mounting means the signals of the sensing means move over portion of respective opposite sides of the wheel.

The advantage of this feature of the invention is that it permits the distances of both sides of the wheel from a reference plane to be determined relatively easily and accurately.

In one embodiment of the invention, the detecting means comprises a transducer for monitoring the position of the mounting means, and each sensing means is provided by an ultrasonic sensor having an ultrasonic transmitter and receiver contained therein.

The advantage of this feature of the invention is that it provides a device which is particularly accurate, easy to use and relatively easy to manufacture.

Advantageously, the mounting means is provided by a framework having a pair of spaced apart side members, which in use receive portion of the wheel therebetween, the predetermined position and direction of the signal of the sensing means being fixed relative to respective side members of the framework.

The advantage of this feature of the invention is that it provides an apparatus which provides relatively accurate results and is relatively easy to manufacture and is also robust.

In a further embodiment of the invention, the predetermined positions from which the signal of the sensing means are transmitted are located on respective side members substantially opposing each other, the signals of the sensing means being transmitted towards the wheel in a direction substantially parallel to the rotational axis of the wheel, and the framework being movable so that the predetermined positions move in a substantially radial direction towards the rotational axis of the wheel.

The advantage of this feature of the invention is that it provides apparatus which is relatively easy to construct and operate.

Preferably, one predetermined position is slightly advanced of the other predetermined position in the direction of motion of the framework towards the rotational axis of the wheel.

The advantage of this feature of the invention is that it provides a device which provides relatively accurate results, and also provides a device in which errors can be readily easily determined and recognised.

Advantageously, the mounting means is pivotally mounted to the housing about a pivot axis, the pivot axis being parallel to and spaced apart from the rotational axis of the wheel, the pivot axis and rotational axis together defining a common plane.

The advantage of this feature of the invention is that it provides apparatus which is relatively easy to produce, to use and which is relatively robust.

In a further embodiment of the invention, the means for storing reference parameters of reference wheels stores the cross sectional profile of at least portion of the reference wheels, and the computing means comprises means for computing a profile of portion of the wheel and comparing it with the reference profiles for determining at least the radius of the balance weight receiving location of the wheel.

The advantage of this feature of the invention is that it provides a relatively accurate apparatus and also an apparatus which is relatively easy to use.

Alternatively, each sensing means detects the periphery of the well of the hub of the wheel and the computing means stores distances of the surfaces of the radial sides of the wheel against corresponding values of radii at intervals on movement of the mounting means, and the computing means comprises means for computing the radius of the periphery of the well of the hub from the signals received from the sensing means and the detecting means, and means for adding a predetermined distance to the computed value of the radius of the periphery of the well for determining the radius of the balance weight receiving location, and means for looking up a stored value of distance of the surface of the or each radial side of the wheel from the reference plane, corresponding to the radius of the balance weight receiving location.

The advantage of this feature of the invention is that it provides apparatus which is relatively easy to use and robust.

In one embodiment of the invention, the radius and distance of balance weight receiving locations on each side of the wheel are determined, the radius of each balance weight receiving location being the radius of the rim of the hub and the distance of each balance weight receiving location being the distance of a surface of a respective side wall of the hub adjacent the rim from the reference plane.

The advantage of this feature of the invention is that it eliminates the possibility of errors involved in manually entering the radius and distance from a reference plane of the balance weight locations and also significantly reduces the labour content and the skill required to operate a wheel balancer.

Further, the invention provides a method for determining the radius of a balance weight receiving location of a wheel from the rotational axis of the wheel and for determining the distance of the balance weight receiving location from a reference plane, using the apparatus according to the invention for use in computing the size of a balance weight, the method comprising the steps of:

moving the mounting means so that the signals of the sensing means move over at least portion of the radial sides of the wheel,

recording and storing the distances of the surface of portion of each radial side of the wheel from the reference plane against the corresponding positions of the mounting means at a plurality of different positions of the mounting means at intervals as the mounting means is moved,

comparing some of the stored values against reference parameters of reference wheels for determining the type of wheel and for determining the radius of the balance weight receiving location from the reference parameters,

determining the distance of the location from the reference plane from at least some of the stored values of the output signals received from the sensing means, and

computing the size of the balance weight from the computed radial distance and the distance from the reference plane.

The advantage of this feature of the invention is that it provides a method for determining the radial position and distance from a reference plane of a balance weight receiving location on a vehicle wheel and the use of the method provides relatively accurate results.

In one embodiment of the invention, the method includes computing a profile of a cross section of at least portion of the wheel and comparing the computed profile with reference profiles of reference wheels to determine the type of wheel, each profile comprising a profile of a section of the wheel hub adjacent the well periphery of the hub, and the radius of two balance weight receiving locations and distances of two balance weight receiving locations from the reference plane are computed.

The advantage of this feature of the invention is that it provides a method which is relatively simple and straightforward to use.

Alternatively, the method further comprises the step of computing the radius of the periphery of the hub well from signals received from the sensing means and detecting means on one or both of the sensing means detecting a relatively large change in distance of the outer surface of a radial side of the hub from the reference plane, adding a predetermined distance corresponding to the difference between the rim radius of the hub and the well peripheral radius to the well peripheral radius to provide the radius of the hub rim, looking up the stored values of the distances of the surfaces of the radial sides of the wheel from the reference plane corresponding to a radius of the side wall adjacent the hub rim.

The advantage of this feature of the invention is that it also provides a method which is relatively easy and straightforward to use.

The invention will be more clearly understood from the following description of some preferred embodiments thereof, given by way of example only, with reference to the accompanying drawings, in which:

Fig. 1 is a perspective view of wheel balancing apparatus according to the invention,

Fig. 2 is a perspective view of the wheel balancing apparatus of Fig. 1 with portion of the apparatus in a different position,

Fig. 3 is a partly cut-away perspective view of the wheel balancing apparatus of Fig. 1,

Fig. 4 is a cross sectional view of a detail of the apparatus of Fig. 1,

Fig. 5 is a cross sectional view of portion of a vehicle wheel illustrated mounted on portion of the apparatus of Fig. 1,

Fig. 6 is a further cross sectional view of portion of the vehicle wheel of Fig. 5,

Fig. 7 is a schematic representation of portion of the apparatus of Fig. 1 illustrating how computations are carried out by the apparatus,

Fig. 8 is a logic block diagram of part of the apparatus of Fig. 1,

Fig. 9 is a perspective view of wheel balancing apparatus according to another embodiment of the invention,

Fig. 10 is a perspective view of apparatus according to another embodiment of the invention,

Fig. 11 is a plan view of the apparatus of Fig. 10,

Fig. 12 is a sectional end view of the apparatus of Fig. 10, and Fig. 13 is a sectional view of a detail of the apparatus of Fig. 10.

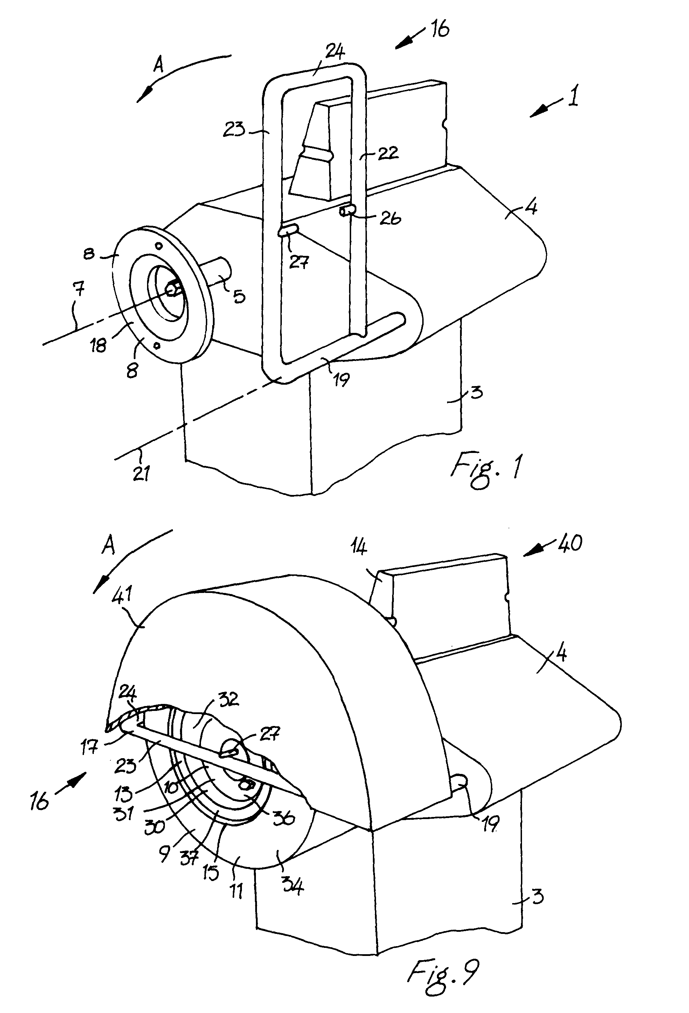

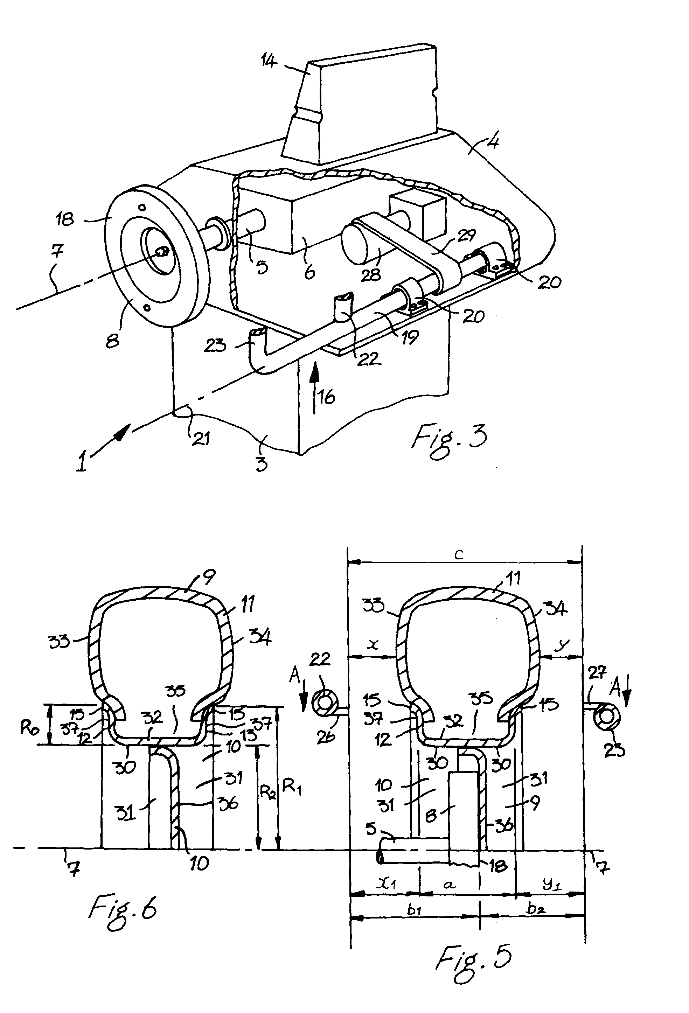

Referring to the drawings and initially to Figs. 1 to 8, there is illustrated wheel balancing apparatus, namely a wheel balancer according to the invention indicated generally by the reference numeral 1. The wheel balancer 1 comprises a ground engaging pedestal 3 portion of which is illustrated. A housing 4 is supported on the pedestal 3. A receiving means for receiving a rotatable member to be balanced namely a vehicle wheel 9 is provided by a wheel support shaft 5 rotatable about its central axis 7. The wheel support shaft 5 is rotatably mounted in a sub-housing 6 within the housing 4. A coupling plate 8 fast on the shaft 5 receives a wheel 9 for balancing so that the rotational axis of the wheel is coaxial with the rotational axis 7 of the shaft 5. Suitable transducers (not shown) are mounted within the sub-housing 6 for sensing stresses and strains in the shaft 5 for determining the out of balance moment of the wheel 9 when it is rotated, see Fig. 3. The transducers (not shown) relay the monitored values to a microprocessor 60 in the wheel balancer 1 which determines the weights and their angular positions required on the inside and outside of the wheel 9 to correct the imbalance. A visual display 14 in the housing 4 displays the size of the weights and their angular positions. This aspect of the electronic circuitry for determining the size of the weights and their angular position is not described in further detail, since it will be well known to those skilled in the art. The microprocessor 60 is illustrated in Fig. 8 which is described below. The wheel balancer 1 is of the type in which the wheel 9 and shaft 5 are rotated by hand, namely of the type disclosed in British Patent Specification No. 2,131,561B and will be well known to those skilled in the art.

The wheel 9 comprises a hub 10 and tyre 11 mounted on the hub 10. An inside side wall 12 and an outside side wall 13 extend from a hoop 32 and form with the hoop 32 an annular recess 35 for receiving the tyre 11. The side walls 12 and 13 terminate in rims 15. A centre plate 36 within the hoop 32 forms a well 31 and defines a periphery 30 of the well 31. For convenience, the inside radial face of the wheel 9 is indicated by the reference numeral 33 and the outside radial face of the wheel is indicated by the reference numeral 34. Balancing weights for correcting the imbalance in the wheel are secured to suitable balance weight receiving locations on the wheel hub. In the wheel 9 illustrated in Figs. 1 to 18, the balance weights, in general, are clipped on to the rim 15 of either or both the inside wall 12 and the outside wall 13 and in practice the weights abut tightly against outer surfaces 37 of the side walls 12 and 13. Thus, to determine the value and angular position of a balancing weight or weights required to correct imbalance forces in the wheel 9, it is necessary to know the radius of the rim 15 of the side walls 12 and 13 and the distances of the outer surfaces 37 of the side walls adjacent the rim 15 from a reference plane described below in the wheel balancer 1. In wheels of other construction, where it is not convenient to attach balance weights to the hub rim, for example, in the case of aluminium and/or alloy wheels, other balance weight receiving locations besides the wheel rim are used. Typically, balance weights may be secured to the periphery of the hub well formed by the hoop 32. In such cases, the balance weights are secured by adhesive to the hoop 32, generally a balance weight, if necessary, is provided on each side of the centre plate 36.

Apparatus for determining the radius of a balance weight receiving location of the wheel 9 from the rotational axis 7 of the shaft 5 is indicated generally by the reference numeral 16 and is mounted in the housing 4. In this particular case, since the balance weight is to be attached to the rim 15 of the hub 10, and thus the balance weight receiving location is adjacent the rim 15 of the hub 10, the apparatus determines the radius of the rim 15 from the rotational axis 7. The radius of the rim 15 from the rotational axis 7 of the shaft 5 is referred to as the radius $R_1$, see Fig. 6. The apparatus 16 also determines the distance of the characteristic, namely, the balance weight receiving location from a reference plane. Since in this case the balance weights are to be clipped onto the rim 15 and abut the side walls 12 and 13, the apparatus determines the distance of the outer surfaces 37 of the inside side wall 12 and the outside side wall 13 of the hub 10 adjacent the rim 15 from the reference plane of the wheel balancer. In this embodiment of the invention, the reference plane is a face 18 of the coupling plate 8. The width of the hub between the outer surfaces 37 of the side walls 12 and 13 adjacent the rim 15 is also determined. This width of the hub 10 adjacent the rim 15 is referred to as a, see Fig. 5.

The apparatus 16 comprises a mounting means provided by a framework 17, which is constrained to move in a predetermined path relative to the housing. In this case, the framework 17 pivots in a predetermined path relative to the housing. The framework 17 comprises a main pivot member 19 which is pivotally mounted in the housing 4 by bearings 20 and which defines a pivot axis 21. The pivot member 19 and bearings 20 are so arranged that longitudinal sliding of the pivot shaft 19 relative to the housing 4 is prevented. A pair of side members 22 and 23 in a common plane extend radially from the pivot member 19 to, in use, pass on each side over portion of the radial sides 33 and 34 of the wheel 9 as the framework 17 is pivoted about its pivot axis 21. A cross member 24 joins the side members 22 and 23.

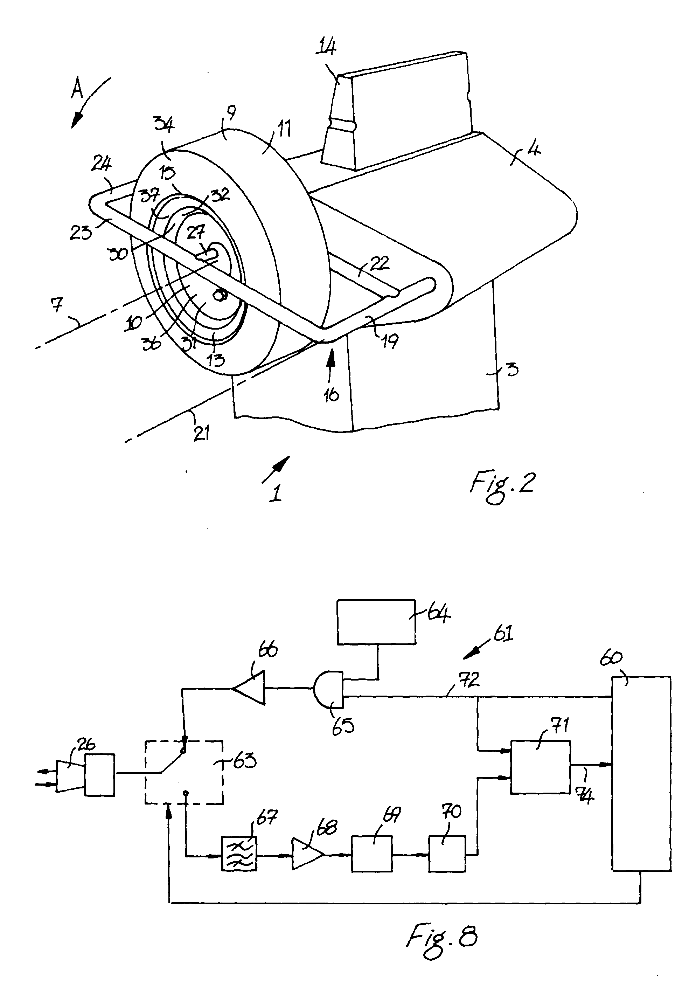

The pivot axis 21 of the pivot member 19 is parallel to the rotational axis 7 of the shaft 5. Further, the two axes 7 and 21 define a common plane and are spaced apart from each other a distance greater than the maximum radius of the largest wheel 9 to be balanced. This can clearly be seen in Fig. 2. Accordingly, when the wheel 9 is mounted on the coupling plate 8 of the wheel balancer 1, the framework 17 can be pivoted downwardly over the wheel 9 in the direction of the arrow A.

A pair of sensing means, namely ultrasonic transducers 26 and 27 are mounted on the side members 22 and 23 for scanning respective radial sides 33 and 34 of the wheel 9 for detecting a characteristic of the wheel 9, in this case for detecting the periphery 30 of the wheel well 31 of the hub 10 as will be described below. Each ultrasonic transducer 26 and 27 comprises an ultrasonic transmitter and receiver, neither of which are illustrated. The transmitter and receiver of the transducers 26 and 27 direct and receive signals towards the sides 33 and 34 respectively of the wheel 9 from predetermined positions relative to the framework and in predetermined directions. In this case, the predetermined positions as can be seen are the positions of the transducers 26 and 27 on the side members 22 and 23 of the framework 17. In this case, the signals are directed in a predetermined direction which is parallel to the rotational axis 7 of the shaft 5. In other words, the signal from each transmitter strikes the wheel 9 substantially perpendicularly to the plane of the face 18 of the coupling plate 8. Thus, the output signal from the transducers 26 and 27 are proportional to their distances from the surfaces of the respective sides 33 and 34 of the wheel 9. In this case, the distance of the transducer 26 from the side 33 of the wheel 9 is referred to as distance x, while the corresponding distance of the transducer 27 from the side 34 is referred to as the distance y, see Fig. 5. The distance of the transducer 26 from the reference plane 18 is referred to as $b_1$ and the distance of the transducer 27 from the reference plane 18 is referred to as $b_2$, see Fig. 5. Accordingly, the distance of any point on the surface of the inside 33 of the wheel 9 from the reference plane 18 is

$$b_1 - x,$$

and the distance from any point on the surface of the outside 34 of the wheel 9 from the reference plane 18 is

$$b_2 - y,$$

$b_1$ and $b_2$ being known.

Furthermore, the width of any portion of the wheel 9 is

$$c - x - y$$

where c is the distance between the transducers 26 and 27 which in this case is 60 mm, see Fig. 5.

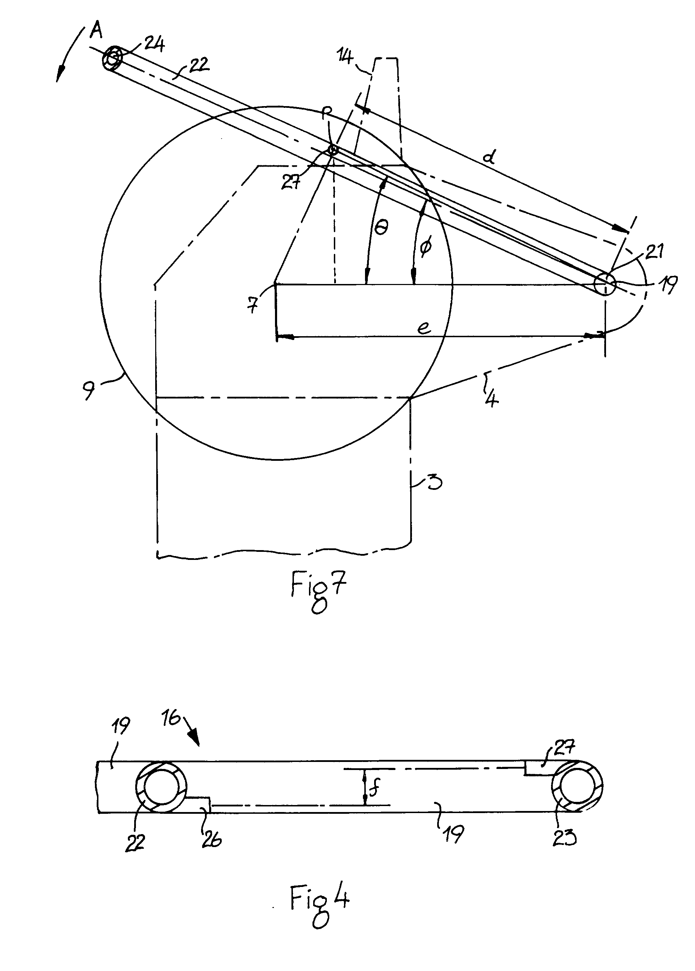

The ultrasonic transducers 26 and 27 are mounted on the framework 17 at a distance d from the pivot axis 21 which is substantially equal to the distance e between the rotational axis 7 and the pivot axis 21, see Fig. 7. Thus, as the framework 17 is pivoted, the transducers 26 and 27 move substantially radially towards or away from the rotational axis 7 of the shaft 5. The ultrasonic transducers 26 and 27 while they are directed towards each other are not totally aligned with each other, the transducer 26 is advanced a distance f of the transducer 27 in the direction of motion of the framework 17 as it pivots towards the rotational axis 7, see Fig. 4. In this case, the distance f is 10 mm. In other words, the angle which the ultrasonic transducer 26 defines with the common plane of the axes 7 and 21 about the pivot axis 21 is always slightly less than the equivalent angle of the ultrasonic transducer 27 for any given position of the framework 17. This enables the transducer 27 to confirm certain readings made by the transducer 26 as will be described below.

Detecting means for detecting the angular position of the framework 7 about its axis 21 relative to the common plane of the axes 7 and 21 and in turn for detecting the angular position of the transducers 26 and 27 is provided by a rotary type potentiometer transducer 28 connected to the pivot member 19 by a semi-rigid band 29. In this case, the gear ratio between the transducer 28 and the pivot shaft 19 is 2:1 and accordingly the electrical output from the transducer 28 is proportional to

$$\frac{K\phi}{2}$$

where

K is a constant of the transducer 28, and
$\phi$ is the angle which the framework 17 makes with the common plane defined by the axes 7 and 21 about the axis 21, see Fig. 7.

This is described in more detail below.
Signals from the ultrasonic transducers 26 and 27 and the transducer 28 are fed into computing means, which is provided by the microprocessor 60 of the wheel balancer 1 through circuitry which is described below. Suitable software is provided in the microprocessor 60 for operating on the signals from the transducers 26, 27 and 28. As the framework 17 is pivoted downwardly in the direction of arrow A from the position illustrated in Fig. 1 over the wheel 9, the signals from the transducers 26, 27 and 28 are read and stored in storing means provided by memory in the microprocessor 60. In this case, a set of readings is taken at every 2° interval of movement of the framework 17 with the common plane of the axes 7 and 21. In other words, a reading is taken for every 2° change in the angle $\phi$. The read values of distances x and y from the transducers 26 and 27 respectively are stored against the corresponding angular position $\phi$ of the framework read from the transducer 28.

It has been found in general that it is relatively difficult unless one uses relatively sophisticated ultrasonic transducers and electronic monitoring apparatus to determine precisely the position of the hub rim 15. The reason for this is because of the relatively small variation in the values of x and y as the transducer 26 and 27 pass from the wall of the tyre 11 over the rim 15. Thus, in this case suitable software is provided for detecting a sudden relatively large change in the values of x and y which thus indicates the position of the periphery 30 of the hub well 31. In this case, the radius of the periphery 30 of the hub well 31 is referred to as $R_2$. The radial distance between the rim 15 and the hub well periphery 30 is referred to as $R_0$, see Fig. 6. The value of $R_0$ is constant for all hubs of a particular hub rim radius $R_1$, and accordingly, the radius $R_2$ of the well periphery 30 is similarly constant for all hub rims of similar radius $R_1$. The values of $R_0$ and $R_2$ are stored in memory for hubs of different radii $R_1$. These are stored in a look up table in memory in the computer 60 so that the microprocessor 60, on determining the radius $R_2$ of the well periphery 30, can look up the appropriate value of $R_0$. The microprocessor 60 adds the appropriate value of $R_0$ to the value of $R_2$ to obtain the radius $R_1$ of the rim 15 of the hub 10.

Since the ultrasonic transducer 26 is positioned advanced of the transducer 27, the transducer 26 detects the periphery 30 of the hub well 31 first. The angular position of the framework 17 detected by the transducer 28 at which the periphery 30 is detected by the transducer 26 is stored in memory. Further downward movement of the framework 17 over the wheel 9 brings the transducer 27 into alignment with the periphery 30 of the wheel well 31. Provided the transducer 27 detects the periphery 30 in a similar position allowing for the 10 mm offset between the two transducers 26 and 27, and within certain predetermined tolerance limits, the position of the periphery 30 is confirmed.

The microprocessor 60 of the wheel balancing apparatus 1 under the control of the software determines the radius $R_2$ from the angular readings of the transducer 28 when the transducers 26 and 27 detected the periphery 30.

The radius $R_1$ is then computed by adding the appropriate value of $R_0$ to $R_2$. The angular positions of the transducers 26 and 27 which would correspond to the radius of the side walls 12 and 13 adjacent the rim 15, namely a radius just less than the radius $R_1$, is then

determined. The distances x and y of the transducers 26 and 27 from the wheel 9 stored against these particular angular values are read from the memory. The distances of the inside side wall 12 and outside side wall 13 of the hub 10 adjacent the rim 15 from the reference plane 18 are computed from the looked up values using the formulae

$$b_1 - x_1,$$

$$b_2 - y_1,$$

respectively.

The width a of the hub 10 from the outer surfaces 37 of the side walls 12 and 13 adjacent the rim 15 is determined from the looked up values using the formula

$$a = c - x_1 - y_1$$

where $x_1$ and $y_1$ are the distances of the inside side wall 12 and outside side wall 13 adjacent the rim 15 from the transducers 26 and 27 respectively, see Fig. 5.

In practice, the outer surfaces 37 of the inner and outer side walls 12 and 13 are substantially parallel. Thus, to obtain the values $x_1$ and $y_1$, the values of x and y corresponding to an angular position of the framework 17 which corresponds to a radius halfway between the radii $R_1$ and $R_2$ may be obtained and will give a relatively accurate value for the values $x_1$ and $y_1$.

Referring to Fig. 7, the formula used by the microprocessor 60 for determining the radius R of any point P on the wheel 9 from the rotational axis 7 of the shaft 5 is as follows:

$$R = \sqrt{(e\text{-}d\text{Cos }\theta)^2 + (d\text{Sin }\theta)^2}$$

where d and e are equal and are respectively the distances from the pivot axis 21 to either of the transducers 26 or 27, and the distance from the pivot axis 21 to the rotational axis 7 of the shaft 5, and $\theta$ is the angle which either of the transducer 26 or 27 makes with the common plane of the axes 7 and 21 about the axis 21 on detecting the point P.

The value of $\theta$ is computed by the microprocessor from the value of $\phi$ obtained from the transducer 28 when either of the transducers 26 or 27 detect the point P by making an allowance for the known angular offsets of the transducers 26 and 27 from the angle $\phi$ which the framework 17 makes with the common plane of the axes 7 and 21 about the pivot axis 21.

The outputs from the transducers 26 and 27 are calibrated by each transducer 26 and 27 taking a distance reading off the other transducer 27 and 26 respectively. These readings correspond to the distance c between the transducers 26 and 27 which is stored in memory in the microprocessor of the apparatus 1. Thus, each time the framework 17 is pivoted downwardly over a wheel to be balanced, the microprocessor 60 of the apparatus 1 takes a reading from the output of each transducer corresponding to its distance from the other transducer for calibration prior to the framework 17 passing over the wheel 9.

The distances of the transducers 26 and 27 from the reference plane 18 is periodically checked and calibrated. This is done by pivoting the frame-work 17 over the coupling plate 8 without a wheel being mounted thereon, and determining the distances $b_1$ and $b_2$ of the transducers 26 and 27 from the face 18 of the coupling plate 8 by taking readings from the transducers 26 and 27, on the transducer 28 giving a reading at which the transducers 26 and 27 would be aligned with the face 18 of the coupling plate 8. The new values of $b_1$. and $b_2$ are stored in the memory of the microprocessor 60 of the wheel balancer 1.

Referring now to Fig. 8 circuitry 61 associated with the transducer 26 and which connects the transducer 26 to the microprocessor 60 is illustrated. Similar circuitry is provided for the transducer 27. The circuit 61 comprises a transistor switching device 63 for switching the transducer 26 from transmit to receive. The switching device 63 is controlled by the microprocessor 60. A carrier signal generator, namely an oscillator 64 generates a carrier signal for delivery to the transducer 26 for transmission. In this case, the oscillator generates carrier signals at 200 KHz. The generated signals are delivered from the oscillator 64 through a gate 65 to an amplifier 66. The gate 65 is controlled by the microprocessor 60 through the line 72 to allow a pulse of determined length of the carrier signal through. The pulse from the gate 65 is amplified in the amplifier 66 and delivered to the transistor switch 63. The pulse signal is transmitted by the transducer 26. The transistor switch 63 is switched over by the microprocessor 60 to connect the transducer 26 to a tuned filter 67, so that the reflected signal received by the transducer 26 is fed into the tuned filter 67 which is tuned to deliver pulses at the same frequency as the carrier signal frequency, in this case 200 KHz. The filter delivers the filtered signal to an amplifier 68 where it is amplified and delivered to a signal conditioning unit 69. The conditioned signal is then delivered to a demodulation unit 70 which removes the carrier frequency, thus delivering a pulse to a delay measurement unit 71. The delay measuring unit 71 comprises a timing circuit (not shown) which times the time between the pulse signal being transmitted and it being received. The timing circuit in the unit 71 is activated to commence timing when a signal from the microprocessor appears on the line 72 to open the gate 65. The timer stops timing when a pulse is received from the demodulation unit 70. The time recorded by the unit 71 is read by the microprocessor 60 on the line 74. The distance of the wheel surface from which the signal was reflected to the transducer is then computed by the microprocessor 60 from the time value. This thus gives the value of x. This value of x is stored in memory of the microprocessor 60 against the corresponding value of $\phi$. Values of y and $\phi$ are similarly computed and stored.

In use, with the framework 17 in its raised position illustrated in Fig. 1, the wheel 9 is mounted coaxially on the coupling plate 8 of the shaft 5. The wheel 9 is rotated by hand. The framework 17 is then pivoted downwardly in the direction of the arrow A to the position illustrated in Fig. 2. As the framework 17 pivots downwardly, the radius $R_1$ of the rim 15 of the hub 10 and the distances $x_1$ and $y_1$ of the outer surfaces 37 of the inside side wall 12 and outside side wall 13 of the hub 10 from the reference plane 18 as well as the width a of the hub 10 across the side walls 12 and 13 adjacent the rim 15 are determined as already described. These values are stored in the memory of the microprocessor 60 of the wheel balancer 1. As the wheel 9 rotates, the imbalance of the wheel is determined, the stored values of $R_1$, $x_1$ and $y_1$ are used by the microprocessor in computing the size of the weights for the inside and outside positions on the rim 15 under the control of the software. The values of the weights and their angular positions are displayed on the visual display 14.

It will therefore be appreciated that by using the wheel balances according to the invention, there is no longer any need for the operator of the wheel balancer 1 to input manually any data into the wheel balances 1. Thus, the wheel balances according to the invention substantially eliminates operator error, and furthermore substantially reduces the labour required to operate the wheel balancer 1.

Referring now to Fig. 9 there is illustrated a wheel balancer according to another embodiment of the invention indicated generally by the reference numeral 40. This wheel balancer 40 is substantially similar to that just described, and similar components are identified by the same reference numerals. In this case, the wheel support shaft is driven by a motor (not shown) and a hood 41 is provided over the framework 17. A relay (not shown) which activates the drive motor of the wheel support shaft is activated by the hood as it is pivoted downwardly in the direction of the arrow A. Thus, in use, as the hood 41 and framework 17 are pivoted downwardly in the direction of the arrow A, the wheel support shaft drive motor is activated, thereby rotating the wheel 9. Further downward pivoting of the hood 40 over the wheel 9 causes the transducers 26 and 27 to pass over portion of the respective sides 33 and 34 of the wheel 9 as in the case of the apparatus 1. Otherwise, the apparatus 40 is similar to that of the apparatus 1.

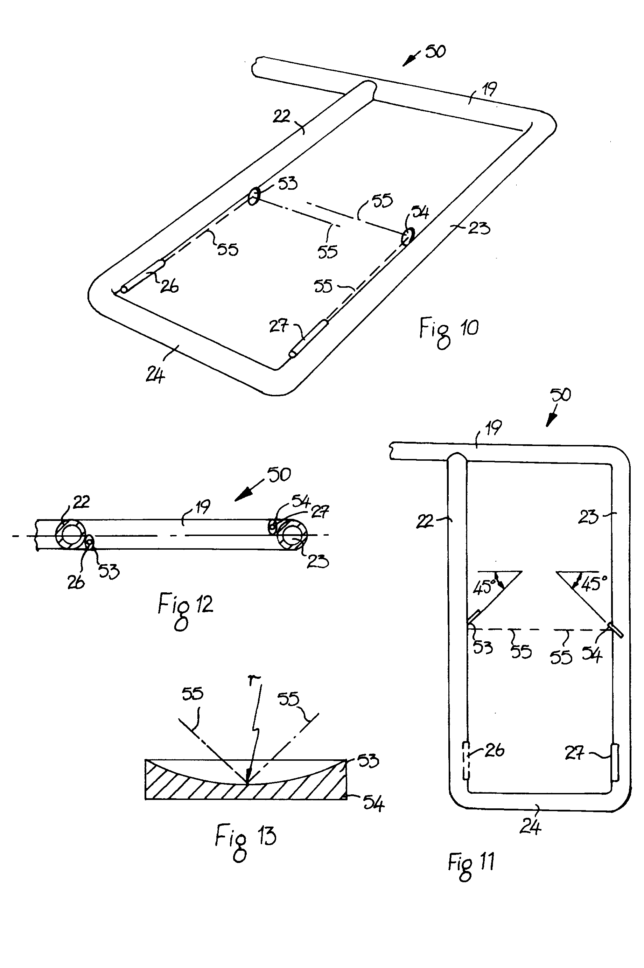

Referring now to Figs. 10 to 13, there is illustrated a framework 50 of apparatus also for mounting on a wheel balancer, such as the wheel balancer 1 for determining the hub rim radius $R_1$ and the distances of the outer surfaces 37 of the side walls 12 and 13 of the hub 10 adjacent the rim 15 from a reference plane of the wheel balancer. This apparatus is substantially similar to the apparatus 16, and only the framework 50 is illustrated. The framework 50 is substantially similar to the framework 17 and similar components are identified by the same reference numerals. In this case, the ultrasonic transducers 26 and 27 which are ultra sonic transducers similar to the transducers 26 and 27 on the framework 17 are mounted on the side members 22 and 23 respectively but towards the cross member 24. However, the transducers 26 and 27 are directed so that the signal transmitted by the two transducers 26 and 27 are directed substantially parallel to the side members 22 and 23. Focusing means, in this case provided by focusing mirrors 53 and 54 on the side members 22 and 23 respectively, direct the signals illustrated by broken lines 55 fron the transducers 26 and 27 substantially parallel to the rotational axis 7 of the wheel balancer 1 and substantially perpendicular to the reference plane 18 towards the wheel 9. In this case, the focusing mirrors 53 and 54 are concave and circular having a diameter of approximately 6.35 mm and a radius r of curvature of approximately 35.56 mm. The mirrors 53 and 54 are mounted at an angle of 45° to the side members 22 and 23. The transducer 26 is mounted towards the bottom of the side member 22 as is the corresponding mirror 53, while the transducer 27 is mounted towards the top of the side member 23 as is the mirror 54. This thus gives the offset f. In this particular embodiment of the invention, the focusing mirrors 53 and 54 form the predetermined position from which the signals are transmitted from the side members 22 and 23 towards the wheel 9. Further, the focusing mirrors 53 and 54 also determine the angle at which the signal is directed from the side members 22 and 23.

The framework 50 is pivotally mounted on the wheel balancing apparatus 1 by the pivot member 19 in similar fashion to the framework 17 and accordingly operation of the framework 50 is similar to that of the framework 17. However, by virtue of the fact that focusing mirrors 53 and 54 are used to focus the signals 55 from the transducers 26 and 27 and in turn the reflected signal from the wheel, two advantages are achieved. Firstly, the focused signals give a more precise reading than unfocused signals, and secondly, the distance travelled by the transmitted and reflected signals to and from the transducers 26 and 27 is greater than in the case of the transducers 26 and 27 of the framework 17 and this further gives more accurate results and also facilitates handling of the received signals from the transducers 26 and 27 by the circuitry of Fig. 8.

While in the embodiment of the invention described with reference to Figs. 1 to 8, the distances stored against corresponding angles 5 of the framework 17 have been the distances x and y of the transducers 26 and 27 from the sides 33 and 34 of the wheel 9, it will be appreciated that any distances may be stored. Indeed, it is envisaged in many cases that the distances stored may be the distances of the sides 33 and 34 of the wheel 9 from the reference plane 18.

Furthermore, it is envisaged that in many cases as well as, storing the distances x and y against the different angles φ of the framework, a cross sectional profile of a section through the wheel 9 may be computed. In general, it is envisaged that the cross sectional profile would at least include portion of the hub well and would extend through the side walls 12 and 13 of the hub to at least the rims 15 of the side walls 12 and 13. The storing means would store a plurality of known cross sectional profiles of reference hubs and/or wheels, and the computed profile would be compared with the stored profiles to determine the type of hub on the wheel balancer. Knowing the type of hub, the hub rim radius and the width of the hub across the outer surfaces of the inner and outer side walls could then be readily easily looked up. Thus, by knowing the distance of one or other side wall from the reference plane, the distance of the other side wall could readily easily be computed from the width of the hub 10 across the side walls 12 and 13. In such cases, where the profile of the wheel in the wheel balancer is computed and compared with reference profiles, it is envisaged that the profiles would be compared using suitable curve fitting techniques. These will be well known to those skilled in the art.

It will be appreciated that where a balance weight receiving location of the hub is at a position different than the rim, then the apparatus will determine the radius of that location from the rotational axis of the wheel and will also determine the distance of that location from the reference plane. Where two locations are to be provided, both of different radii and different distances, the apparatus will compute the two radii and the two distances from the reference plane.

It will of course be appreciated that in many cases in determining the distance of the balance receiving location from a reference plane, the apparatus may add a constant equivalent to half the width of the balance weight onto the distances of the side walls of the hub from the reference plane to achieve an even more accurate result. In certain cases, the apparatus may subtract a constant equivalent to half the width of the balance weight from the distance of one or other of the side walls from the reference plane, depending on the position of the reference plane relative to the particular side wall or side walls. This, of course, will be well known and understood by those skilled in the art.

Likewise, a constant may be. added to or subtracted from the computed radius to compensate for the thickness of the balance weight For example, where the weight is clipped on to the rim, the centre of the weight would not directly co-incide with the radius of the rim. Rather, to achieve a particularly accurate result, it would be necessary to deduct a constant from the rim radius to obtain the radius of the point through which the weight of the balance weight acted as the wheel rotated. In general, it is envisaged that by deducting half the thickness of the weight from the computed rim radius, an accurate radius for the point through which the weight of the balance weight acted would be obtained.

It will of course be appreciated that should it be desired for any reason to determine the outer radius of the tyre 11 this can readily easily be done using the readings from the transducers 26, 27 and 28. The ground engaging surface of the tyre is detected by the transducers 26 and 27 by detecting the outer periphery of the side walls of the tyre 11. The radius of the ground engaging surface is then determined from the angle φ read from the transducer 28 which either of the transducers 26 and 27 make with the common plane of the axes 7 and 27 using the formula discussed with reference to Fig. 7.

While particular forms of calibration have been described for calibrating the apparatus 16, any other suitable means of calibration could be used. For example, in many cases, it is envisaged that calibration won't take place each time the framework is pivoted downwardly, and other suitable forms of calibration of the apparatus relative to the reference plane may also be used.

It will be appreciated that while the apparatus 16 according to the invention has been described as being mounted on the wheel balancer 1 of Figs. 1 to 8 in which the wheel 9 and accordingly shaft 5 is rotated by hand, the apparatus 16 could be used with any type of wheel balancer. The wheel balancer 1 may be of the type where the wheel support shaft is motor driven. Further, it will be appreciated that other construction of apparatus 16 could be used without departing from the scope of the invention as claimed. For example, it will be appreciated that the ultrasonic transducers may be mounted on any suitable mounting means besides a framework. Any suitable member, housing, frame or the like may be used. Indeed, it will be readily appreciated that it is not necessary for the framework 17 to be pivoted, it could be linearly movable upwardly or downwardly or from side to side, or indeed at any angle to traverse the ultrasonic transducers over the sides of the wheel.

Indeed, once the relative position of the ultrasonic transducer relative to the rotational axis of the wheel is known, the radial position of the transducer can be determined.

Further, it is not necessary that the sensing means should move radially relative to the rotational axis of the wheel.

Further, it will be appreciated that while two ultrasonic transducers have been described, namely one on each side of the wheel, one transducer is all that is necessary for the invention. The radial position of any point P on a wheel or any member can be readily easily determined by a single transducer, and in certain cases the distances of the inside and outside of the wheel or hub from a reference plane may be determined by a single transducer. Indeed, it will be appreciated that the transducers 26 and 27 could if desired be aligned with each other rather than one being advanced relative to the other.

It is envisaged that the width of the wheel, and/or the width at the hub adjacent the hub rim could also be determined using a single ultra sonic or other type of transducer by providing suitable reflectors to give multiple reflections.

It is envisaged that sensing means other than ultrasonic transducers may be provided. Indeed, the sensing means may be provided by any other suitable type of transducer, for example, an infra red transducer, laser transducer, a visible light transducer, magnetic transducer.

Similarly, other suitable transducers besides the transducer described for measuring the angle of rotation of the pivot member 19 may be used without departing from the scope of the invention as claimed.

Further, it is envisaged that readings of the distances x and y may be taken at any desired angular intervals other than 2°. Needless to say, for more precise results, the readings should be taken at smaller angular intervals.

In certain cases, it is envisaged that instead of taking the readings of the distances x and y at angular intervals, they could be taken at predetermined time intervals, in which case corresponding readings from the three transducers 26, 27 and 28 would be taken and stored.

It is envisaged that suitable drive means, for example a motor or any other suitable drive could be provided for pivoting the framework 16 in the direction of the arrow A over the wheel and also in the return direction.

Further, it is envisaged that the wheel support shaft of the apparatus described with reference to Figs. 1 to 8 could similarly if desired be driven by a drive motor, and if desired, the apparatus of Fig. 9 could be provided by a manually rotatable wheel support shaft.

While specific dimensions have been given in the description, any other dimensions could be used without departing from the scope of the invention. While the offset f between the transducers 26 and 27 has been described as being of 10 mm, it may be greater or less. Indeed, as mentioned above, the two transducers 26 and 27 may be completely aligned with each other. Alternatively, if desired the transducer 27 may be advanced of the transducer 26.

Further, the apparatus could be used for balancing wheels of any diameter from the smallest up to and larger than aircraft wheels, and of any other shape and construction besides the wheel just described.

While a particular logic circuit has been described for dealing with the signals transmitted and received by the transducers 26 and 27, any other suitable logic circuitry could be used without departing from the scope of the invention.

While the transducers have been described as comprising a separate transmitter and receiver, in certain cases it is envisaged that each transducer will comprise a single internal unit which will act as a receiver and transmitter.

While the apparatus according to the invention has been described for measuring the radius of the rim of a hub of a vehicle wheel and the distance of the side walls of the hub adjacent the rim from a reference plane, the apparatus could be used for determining the radial distance of any point on a rotatable member relative to its rotational axis. Further, the apparatus could be used for determining the width of any rotatable member or the width of any rotatable member at a particular point or position and/or the distance of any point on a rotatable member from a reference plane.

Needless to say, it will be appreciated that the apparatus may be used for determining the radius and distance from a reference plane of a balance weight receiving location, where the balance weight is to be attached, for example, by adhesive to the periphery of the hub well formed by the hoop 32 of the hub 10.

While in this particular embodiment of the invention, the apparatus has been used to determine the width of the hub, it will be readily apparent to those skilled in the art that it is not essential that the width of the hub should be determined. Once the distances of the inside and outside walls of the hub from a reference plane have been determined and the radius of the hub rim has been determined that is all that is necessary for automatic operation of the wheel balancer. Indeed, in certain cases, it is envisaged that only the distance of one side wall, for example the inside side wall of the hub may be determined from a reference plane, and in which case the width of the hub would then be determined and inputted from the apparatus 16 into the wheel balancer 1. The wheel balancer 1 could then determine the distance of the other, namely the outside side wall from the reference plane.

## Claims

1. Wheel balancing apparatus of the type comprising a housing (4), a receiving means (5,8) comprising a wheel support shaft (5) rotatably mounted in the housing (4) for receiving a wheel (9) to be balanced, and defining the rotational axis (7) of the wheel (9), a computing means (60) for determining the imbalance of the wheel (9), and a sensing means (26,27) for detecting the wheel (9) and a balance weight receiving location (15), the sensing means (26,27) being mounted on a mounting means (17), the mounting means (17) being movable relative to the housing (4), wherein the sensing means (26,27) is adapted to transmit and recsive a signal for detecting the wheel (9) and the balance weight receiving location (15), the sensing means (26,27) being mounted on the moping means (17) for transmitting the signal towards a radial side face (33,34) of the wheel (9) from a predetermined position (26,27,53,54) relative to the mounting means (17), and the mounting means (17) is constrained to move in a predetermined path relative to the housing (4) so that on movement of the mounting means (17) relative to the housing (4) the signal of me sensing means (26,27) moves over portion of the radial side face (33,34) of the wheel (9), a detecting means (28) for detecting the position of the mounting means (17) relative to the housing (4) is provided, the computing means comprises a storing means for storing output signals received from the sensing means (26,27) which correspond to distances of the radial side face (33,34) of the wheel (9) from a reference plane (18) which extends transversely of the rotational axis (7) against corresponding output signals received from the detecting means (28) at predetermined intervals on movement of the mounting means (17), the computing means (60) comprises a means for storing reference parameters of reference wheels, and a means for computing corresponding parameters of the wheel (9) from the output signals from the sensing means (26,27) and the detecting means (28) stored in the storing means, and a means for comparing the computed parameters of the wheel (9) with the reference parameters of the reference wheels for determining the type of wheel the wheel (9) is and for determining from the reference parameters the radial distance ($R_1$) of the balance weight receiving location (15) from the rotational axis (7), and the computing means computing from the output signals received from the sensing means and stored in the storing means the distance ($x_1,y_1$) of the balance weight receiving location (15) from the reference plane (18), the computed values of the radial distance ($R_1$) and the distance ($x_1,y_1$), from the reference plane (18) being used by the computing means (60) in computing the size of the balance weights.

2. Apparatus as claimed in Claim 1 characterised in that a pair of sensing means (26,27) are mounted on the mounting means (17) so that on movement of the mounting means (17) the signals of the sensing means (26,27) move over portion of respective opposite radial side faces (33,34) of the wheel (9).

3. Apparatus as claimed in Claim 2 characterised in that the mounting means (17) is provided by a framework (17) having a pair of spaced apart side members (22,23), which in use receive portion of the wheel (9) therebetween, the pre-determined position (26,27,53,54) and direction of the signal of the sensing means (26,27) being fixed relative to respective side members (22,23) of the framework (17).

4. Apparatus as claimed in Claim 3 characterised in that the predetermined positions (26.27,53,54) from which the signals of the sensing means (26,27) are transmitted are located on the respective side members (22,23) substantially opposing each other, the signals of the sensing means (26,27) being transmitted towards the wheel (9) in a direction substantially parallel to the rotational axis (7) of the wheel (9), and the framework (17) being movable so that the predetermined positions (26,27,53,54) move in a substantially radial direction towards the rotational axis (7) of the wheel (9).

5. Apparatus as claimed in any of Claims 2 to 4 characterised in that one predetermined position (26,53) is slightly advanced of the other predetermined position (27,54) in the direction of motion of the framework (17) towards the rotational axis (7) of the wheel (9).

6. Apparatus as claimed in any preceding ciaim characterised in that the mounting means (17) is pivotally mounted to the housing (4) about a pivot axis (21), the pivot axis (21) being parallel to and spaced apart from the rotational axis (7) of the wheel (9), the pivot axis (21) and rotational axis (7) together defining a common plane.

7. Apparatus as claimed in any preceding claim characterised in that the detecting means (28) comprises a transducer (28) for monitoring the position of the mounting means (17).

8. Apparatus as claimed in any preceding claim characterised in that each sensing means (26,27) is provided by an ultra sonic sensor (26,27) having an ultrasonic. transmitter and receiver contained therein.

9. Apparatus as claimed in any preceding Claim characterised in that the means for storing reference parameters of reference wheels stores the cross sectional profile of at least portion of the reference wheels, and the computing means (60) comprises means (60) for computing a profile of portion of the wheel (9) and comparing it with the reference profiles for determining at least the radius of the balance weight receiving location (15) of the wheel (9).

10. Apparatus as claimed in any of Claims 1 to 8 characterised in that each sensing means (26,27) detects the periphery (30) of a well (31) of a hub (10) of the wheel (9), and the computing means (60) stores distances of the surfaces (37) of side walls (12,13) of the wheel (9) against corresponding values of radii at intervals on movement of the mounting means (17), and the computing means (60) comprises means for computing the radius ($R_2$) of the periphery (30) of the well (31) of the hub (10) from the signals received from the sensing means (26,27) and the detecting means (28), and means (60) for adding a predetermined distance ($R_0$) to the computed value of the radius ($R_2$) of the periphery (30) of the well (31) for determining the radius ($R_1$) of the balance weight receiving location, and means for looking up a stored value of distance of the surface (37) of the or each side wall (12,13) of the wheel (9) from the reference plane (18), corresponding to the radius ($R_1$) of the balance weight receiving location.

11. Apparatus as claimed in any preceding Claim characterised in that the radius and distance of balance weight receiving locations (15) on each side of the wheel (9) are determined, the radius of each balance weight receiving location (15) being the radius ($R_1$) of the rim (15) of the hub (10), and the distance of each balance weight receiving location (15) being the distance of a surface (37) of a respective side wall (12,13) of the hub (10) adjacent the rim (15) from the reference plane (18).

12. A method for determining the radius of a balance weight receiving location (15) of a wheel (9) from the rotational axis (7) of the wheel (9) and for determining the distance of the balance weight receiving location (15) from a reference plane (18), using the apparatus (16) as claimed in any of Claims 1 to 11, for use in computing the size of a balance weight, the method comprising the steps of:

   moving the mounting means (17) so that the signals of the sensing means (26,27) move over at least portion of the radial sides (33,34) of the wheel (9),
   recording and storing the distances of the surface (37) of portion of each radial side (33,34) of the wheel (9) from the reference plane (18) against the corresponding positions of the mounting means (17) at a plurality of different positions of the mounting means (17) at intervals as the mounting means (17) is moved,
   comparing some of the stored values against reference parameters of reference wheels for determining the type of wheel and for determining the radius ($R_1$) of the balance weight receiving location (15) from the reference parameters,
   determining the distance of the location (12,13) from the reference plane (18) from at least some of the stored values of the output signals received from the sensing means, and
   computing the size of the balance weight from the computed radial distance ($R_1$) and the dis-

tance $(x_1, y_1)$ from the reference plane (18).

13. A method as claimed in Claim 12 characterised in that the method includes computing a profile of a cross section of at least portion of the wheel (9) and comparing the computed profile with reference profiles of reference wheels to determine the type of wheel (9), the computed profile comprising a profile of a section of a wheel hub (10) adjacent a well periphery (30) of the hub (10) of the wheel (9), and the radius of two balance weight receiving locations (15) and distance (12,13) of the two balance weight receiving locations from the reference plane (18) are computed.

14. A method as claimed in Claim 12 characterised in that the method further comprises the step of computing the radius $(R_2)$ of a periphery (30) of a hub well (31) of the wheel (9) from signals received from the sensing means (26,27) and detecting means (28) on one or both of the sensing means (26,27) detecting a relatively large change in distance of the outer surface of a radial side (33,34) of the hub (10) from the reference plane (18), adding a predetermined distance $(R_0)$ corresponding to the difference between the rim radius $(R_1)$ of the hub (10) and the well peripheral radius $(R_2)$ to the well peripheral radius $(R_2)$ to provide the radius $(R_1)$ of the hub rim (15), looking up the stored values of the distances of the surfaces of the radial sides (33,34) of the wheel (9) from the reference plane (18) corresponding to a radius $(R_1)$ of the side wail (12,13) adjacent the hub rim (15).

**Patentansprüche**

1. Radauswuchtvorrichtung der Art mit einem Gehäuse (4), einer Aufnahmevorrichtung (5, 8) mit einer im Gehäuse (4) drehbar gelagerten Radauflagewelle (5) zum Aufnehmen eines auszuwuchtenden Rades (9), welches die Drehachse (7) des Rades (9) bestimmt, einem Rechner (60) zum Ermitteln der Unwucht des Rades (9) und einem Fühler (26, 27) zum Erfassen des Rades (9) und einer ein Ausgleichsgewicht aufnehmenden Stelle (15), wobei der Fühler (26, 27) an einer Befestigungsvorrichtung (17) befestigt ist, die Befestigungsvorrichtung (17) in bezug auf das Gehäuse (4) bewegbar ist, wobei der Fühler (26, 27) dafür eingerichtet ist, ein Signal zum Erfassen des Rades (9) und der ein Ausgleichsgewicht aufnehmenden Stelle (15) zu übertragen und zu empfangen, wobei der Fühler (26, 27) an der Befestigungsvorrichtung (17) zum Übertragen des Signals zu einer radialen Seitenfläche (33, 34) des Rades (9) von einer vorbestimmten Stellung (26, 27, 53, 54) in bezug auf die Befestigungsvorrichtung (17) befestigt ist, und die Befestigungsvorrichtung (17) zwangsläufig auf einer vorbestimmten Bahn in bezug auf das Gehäuse (4) bewegbar ist, so daß sich aufgrund der Bewegung der Befestigungsvorrichtung (17) in bezug auf das Gehäuse (4) das Signal des Fühlers (26, 27) über einen Bereich der radialen Seitenfläche (33, 34) des Rades (9) bewegt, eine Erfassungseinrichtung (28) zum Erfassen der Stellung der Befestigungsvorrichtung (17) in bezug auf das Gehäuse (4) vorgesehen ist und der Rechner eine Speichereinrichtung aufweist zum Speichern von vom Fühler (26, 27) empfangenen Ausgangssignalen, die Abständen der radialen Seitenfläche (33, 34) des Rades (9) von einer Bezugsebene (18) entsprechen, die sich quer zur Drehachse (7) erstreckt, gegenüber in vorbestimmten Intervallen bei Bewegung der Befestigungsvorrichtung (17) empfangenen entsprechenden Ausgangssignalen, der Rechner (60) eine Einrichtung zum Speichern von Bezugsparametern von Bezugsrädern und eine Einrichtung zum Berechnen entsprechender Parameter des Rades (9) aus den in der Speichereinrichtung gespeicherten Ausgangssignalen von dem Fühler (26, 27) und der Erfassungseinrichtung (28) und eine Einrichtung zum Vergleichen der berechneten Parameter des Rades (9) mit den Bezugsparametern der Bezugsräder aufweist, um den Reifentyp des Rades (9) zu bestimmen und aus den Bezugsparametern den radialen Abstand $(R_1)$ der ein Ausgleichsgewicht aufnehmenden Stelle (15) von der Drehachse (7) zu bestimmen, und wobei der Rechner aus den vom Fühler empfangenen und in der Speichereinrichtung gespeicherten Ausgangssignalen den Abstand $(x_1, y_1)$ der ein Ausgleichsgewicht aufnehmenden Stelle (15) von der Bezugsebene (18) berechnete wobei die berechneten Werte des radialen Abstandes $(R_1)$ und des Abstandes $(x_1, y_1)$ von der Bezugsebene (18) vom Rechner (60) beim Berechnen der Größe der Ausgleichsgewichte verwendet werden.

2. Vorrichtung nach Anspruch 1, dadurch gekennzeichnet, daß an der Befestigungsvorrichtung (17) zwei Fühler (26, 27) befestigt sind, so daß sich bei Bewegung der Befestigungsvorrichtung (17) die Signale der Fühler (26, 27) über einen Bereich der entsprechenden gegenüberliegenden radialen Seitenflächen (33, 34) des Rades (9) bewegen.

3. Vorrichtung nach Anspruch 2, dadurch gekennzeichnet, daß die Befestigungsvorrichtung (17) ein Gestell (17) mit zwei voneinander beabstandeten Seitenteilen (22, 23) ist, die bei Gebrauch einen Teil des Rades (9) zwischen sich aufnehmen, wobei die vorbestimmte Stellung (26, 27, 53, 54) und Richtung des Signals der Fühler (26, 27) in bezug auf jeweilige Seitenteile (22, 23) des Gestells (17) fixiert sind.

**4.** Vorrichtung nach Anspruch 3, dadurch gekennzeichnet, daß die vorbestimmten Stellungen (26, 27, 53, 54), aus denen die Signale der Fühler (26, 27) übertragen werden, auf den jeweiligen, im wesentlichen einander gegenüberliegenden Seitenteilen (22, 23) liegen, wobei die Signale der Fühler (26, 27) zum Rad (9) in einer zur Drehachse (7) des Rades (9) im wesentlichen parallelen Richtung übertragen werden und das Gestell (17) so bewegbar ist, daß sich die vorbestimmten Stellungen (26, 27, 53, 54) in einer zur Drehachse (7) des Rades (9) im wesentlichen radialen Richtung bewegen.

**5.** Vorrichtung nach einem der Ansprüche 2 bis 4, dadurch gekennzeichnet, daß eine vorbestimmte Stellung (26, 53) zu der anderen vorbestimmten Stellung (27, 54) in der Bewegungsrichtung des Gestells (17) zur Drehachse (7) des Rades (9) leicht vorgesetzt ist.

**6.** Vorrichtung nach einem der vorhergehenden Ansprüche, dadurch gekennzeichnet, daß die Befestigungsvorrichtung (17) über eine Schwenkachse (21) am Gehäuse (4) schwenkbar befestigt ist, wobei die schwenkachse (21) parallel und von der Drehachse (7) des Rades (9) beabstandet angeordnet ist, wobei die Schwenkachse (21) und Drehachse (7) zusammen eine gemeinsame Ebene bestimmen.

**7.** Vorrichtung nach einem der vorhergehenden Ansprüche, dadurch gekennzeichnet, daß die Erfassungseinrichtung (28) einen Wandler (28) zum Überwachen der Stellung der Befestigungsvorrichtung (17) aufweist.

**8.** Vorrichtung nach einem der vorhergehenden Ansprüche, dadurch gekennzeichnet, daß jeder Fühler (26, 27) ein Ultraschallfühler (26, 27) mit darin enthaltenem Ultraschallsender und -empfänger ist.

**9.** Vorrichtung nach einem der vorhergehenden Ansprüche, dadurch gekennzeichnet, daß die Einrichtung zum Speichern von Bezugsparametern von Bezugsrädern das Querschnittsprofil zumindest eines Teils der Bezugsräder speichert und der Rechner (60) eine Einrichtung (60) zum Berechnen eines Profils eines Teils des Rades (9) und für dessen Vergleich mit den Bezugsprofilen aufweist, um zumindest den Radius der das Ausgleichsgewicht aufnehmenden Stelle (15) des Rades (9) zu bestimmen.

**10.** Vorrichtung nach einem der Ansprüche 1 bis 8, dadurch gekennzeichnet, daß jeder Fühler (26, 27) den Umfang (30) eines Bettes (31) einer Nabe (10) des Rades (9) erfaßt und der Rechner (60) Abstände der Oberflächen (37) von Seitenwänden (12, 13) des Rades (9) gegenüber entsprechenden Werten von Radien in Intervallen bei Bewegung der Befestigungsvorrichtung (17) speichert und der Rechner (60) eine Einrichtung zum Berechnen des Radius ($R_2$) des Umfangs (30) des Bettes (31) der Nabe (10) aus den von den Fühlern (26, 27) und der Erfassungseinrichtung (28) empfangenen Signalen und eine Einrichtung (60) zum Addieren eines vorbestimmten Abstandes ($R_0$) zum berechneten Wert des Radius ($R_2$) des Umfanges (30) des Bettes (31) zum Bestimmen des Radius ($R_1$) der das Ausgleichsgewicht aufnehmenden Stelle sowie eine Einrichtung zum Suchen eines gespeicherten Abstandswertes der Oberfläche (37) der oder jeder Seitenwand (12, 13) des Rades (9) von der Bezugsebene (18) entsprechend dem Radius ($R_1$) der das Ausgleichsgewicht aufnehmenden Stelle aufweist.

**11.** Vorrichtung nach einem der vorhergehenden Ansprüche, dadurch gekennzeichnet, daß der Radius und der Abstand der das Ausgleichsgewicht aufnehmenden Stellen (15) auf jeder Seite des Rades (9) bestimmt werden, wobei der Radius jeder das Ausgleichsgewicht aufnehmenden stelle (15) der Radius ($R_1$) der Felge (15) der Nabe (10) ist und der Abstand jeder das Ausgleichsgewicht aufnehmenden Stelle (15) der Abstand einer Oberfläche (37) einer jeweiligen Seitenwand (12, 13) der Nabe (10) angrenzend an die Felge (15) von der Bezugsebene (18) ist.

**12.** Verfahren zum Bestimmen des Radius einer das Ausgleichsgewicht aufnehmenden stelle (15) eines Rades (9) von der Drehachse (7) des Rades (9) und zum Bestimmen des Abstands der das Ausgleichsgewicht aufnehmenden Stelle (15) von einer Bezugsebene (18) unter Verwendung der Vorrichtung (16) nach einem der Ansprüche 1 bis 11 zum Gebrauch beim Berechnen der Größe eines Ausgleichgewichts, wobei das Verfahren die folgenden Schritte umfaßt:

Bewegen der Befestigungsvorrichtung (17), so daß sich die Signale der Fühler (26, 27) über wenigstens einen Teil der radialen Seiten (33, 34) des Rades (9) bewegen, Aufzeichnen und Speichern der Abstände der Oberfläche (37) eines Teils jeder radialen Seite (33, 34) des Rades (9) von der Bezugsebene (18) gegenüber den entsprechenden Stellungen der Befestigungsvorrichtung (17) in einer Vielzahl verschiedener Stellungen der Befestigungsvorrichtung (17) in Intervallen, während die Befestigungsvorrichtung (17) bewegt wird, Vergleichen einiger der gespeicherten Werte gegenüber Bezugsparametern von Bezugsrädern zum Bestimmen des Reifentyps und zum Bestimmen des Radius ($R_1$) der das Aus-

gleichsgewicht aufnehmenden Stelle (15) aus den Bezugsparametern,

Bestimmen des Abstands der Stelle (12, 13) von der Bezugsebene (18) von wenigstens einigen der gespeicherten Werte der von den Fühlern empfangenen Ausgangssignale, und Berechnen der Größe des Ausgleichsgewichts aus dem berechneten radialen Abstand ($R_1$) und dem Abstand von der Bezugsebene (18).

13. Verfahren nach Anspruch 12, dadurch gekennzeichnet, daß , das Verfahren die Berechnung eines Profils eines Querschnitts wenigstens eines Teils des Rades (9) und den Vergleich des berechneten Profils mit Bezugsprofilen von Bezugsrädern zur Bestimmung des Typs eines Reifens (9) umfaßt, wobei das berechnete Profil ein Profil eines Schnitts einer Radnabe (10) angrenzend an einen Bettumfang (30) der Nabe (10) des Rades (9) aufweist, und der Radius von zwei das Ausgleichsgewicht aufnehmenden Stellen (15) und der Abstand (12, 13) der beiden das Ausgleichsgewicht aufnehmenden Stellen (15) von der Bezugsebene (18) berechnet werden.

14. Verfahren nach Anspruch 12, dadurch gekennzeichnet, daß das Verfahren weiterhin aufweist den Schritt des Berechnens des Radius ($R_2$) eines Umfangs (30) eines Nabenbettes (31) des Rades (9) aus von den Fühlern (26, 27) und der Erfassungseinrichtung (28) empfangenen Signalen, wenn einer der oder beide Fühler (26, 27) eine relativ große Änderung des Abstands der Außenfläche einer radialen Seite (33, 34) der Nabe (10) von der Bezugsebene (18) erfaßt oder erfassen, des Addierens eines vorbestimmten Abstands ($R_0$) entsprechend der Differenz zwischen dem Felgenradius ($R_1$) der Nabe (10) und dem Umfangsradius ($R_2$) des Bettes, um den Radius ($R_1$) der Nabenfelge (15) zu liefern, und des Suchens der gespeicherten Werte der Abstände der Oberflächen der radialen Seiten (33, 34) des Rades (9) von der Bezugsebene (18) entsprechend einem Radius ($R_1$) der Seitenwand (12, 13) angrenzend an die Nabenfelge (15).

**Revendications**

1. Appareil d'équilibrage de roue du type comprenant un capot (4), un moyen de réception (5, 8) comprenant un arbre de support de roue (5) monté en rotation dans le capot (4) pour recevoir une roue (9) à équilibrer, et définissant l'axe de rotation (7) de la roue (9), un moyen de calcul (60) pour déterminer le déséquilibre de la roue (9), et un moyen de détection (26, 27) pour détecter la roue (9) et un emplacement de réception de contrepoids d'équilibre (15), le moyen de détection (26, 27) étant monté sur un moyen de montage (17), le moyen de montage (17) pouvant être déplacé par rapport au capot (4), dans lequel le moyen de détection (26, 27) est conçu pour transmettre et pour recevoir un signal pour détecter la roue (9) et l'emplacement de réception de contrepoids d'équilibre (15), le moyen de détection (26, 27) étant monté sur le moyen de montage (17) pour transmettre le signal vers une face latérale radiale (33, 34) de la roue (9) depuis une position prédéterminée (26, 27, 53, 54) par rapport au moyen de montage (17), et le moyen de montage (17) est obligé de se déplacer selon un trajet prédéterminé par rapport au capot (4) de façon que lors du déplacement du moyen de montage (17) par rapport au capot (4), le signal du moyen de détection (26, 27) se déplace sur la partie de la face latérale radiale (33, 34) de la roue (9), un moyen de détection (28), pour détecter la position du moyen de montage (17) par rapport au capot (4), est prévu, le moyen de calcul comprend un moyen de stockage pour stocker des signaux de sortie reçus en provenance du moyen de détection (26, 27) qui correspondent à des distances de la face latérale radiale (33, 34) de la roue (9) à partir d'un plan de référence (18) qui s'étend transversalement à l'axe de rotation (7) par rapport à des signaux de sortie correspondants reçus en provenance du moyen de détection (28) à des intervalles prédéterminés lors du déplacement du moyen de montage (17), le moyen de calcul (60) comprend un moyen de stockage de paramètres de référence de roues de référence, et un moyen de calcul de paramètres correspondants de la roue (9) à partir des signaux de sortie en provenance du moyen de détection (26, 27) et du moyen de détection (28) stockés dans le moyen de stockage, et un moyen de comparaison des paramètres calculés de la roue (9) aux paramètres de référence des roues de référence pour déterminer le type de roue de la roue (9), et pour déterminer à partir des paramètres de référence la distance radiale ($R_1$) de l'emplacement de réception de contrepoids d'équilibre (15) par rapport à l'axe de rotation (7), et le moyen de calcul calculant, à partir des signaux de sortie reçus en provenance du moyen de détection et stockés dans le moyen de stockage, la distance ($x_1$, $y_1$) de l'emplacement de réception de contrepoids d'équilibre (15) par rapport au plan de référence (18), les valeurs calculées de la distance radiale ($R_1$) et de la distance ($x_1$, $y_1$) par rapport au plan de référence (18) étant utilisées par le moyen de calcul (60) pour le calcul de la taille des contrepoids d'équilibre.

2. Appareil selon la revendication 1, caractérisé en ce qu'une paire de moyens de détection (26, 27) est montée sur le moyen de montage (17) de façon que, lors du déplacement du moyen de montage (17), les signaux du moyen de détection (26, 27) se déplacent sur la partie des faces latérales radiales (33, 34) opposées respectives de la roue (9).

3. Appareil selon la revendication 2, caractérisé en ce que le moyen de montage (17) est réalisé par un cadre (17) ayant une paire d'éléments latéraux espacés (22, 23), qui, en fonctionnement, reçoivent la partie de la roue (9) entre eux, la position prédéterminée (26, 27, 53, 54) et l'orientation du signal du moyen de détection (26, 27) étant fixées par rapport aux éléments latéraux respectifs (22, 23) du cadre (17).

4. Appareil selon la revendication 3, caractérisé en ce que les positions prédéterminées (26, 27, 53, 54), à partir desquelles les signaux du moyen de détection (26, 27) sont transmis, sont situées sur les éléments latéraux respectifs (22, 23) sensiblement les uns en face des autres, les signaux du moyen de détection (26, 27) étant transmis vers la roue (9) dans une direction sensiblement parallèle à l'axe de rotation (7) de la roue (9), et le cadre (17) pouvant être déplacé de façon que les positions prédéterminées (26, 27, 53, 54) se déplacent dans une direction sensiblement radiale vers l'axe de rotation (7) de la roue (9).

5. Appareil selon l'une quelconque des revendications 2 à 4, caractérisé en ce qu'une position prédéterminée (26, 53) est légèrement avancée par rapport à l'autre position prédéterminée (27, 54) dans le sens de déplacement du cadre (17) vers l'axe de rotation (7) de la roue (9).

6. Appareil selon l'une quelconque des revendications précédentes, caractérisé en ce que le moyen de montage (17) est monté, de façon à pouvoir pivoter, par rapport au capot (4) autour d'un axe de pivot (21), l'axe de pivot (21) étant parallèle à l'axe de rotation (7) de la roue (9) et étant espacé de ce dernier, l'axe de pivot (21) et l'axe de rotation (7) définissant tout deux un plan commun.

7. Appareil selon l'une quelconque des revendications précédentes, caractérisé en ce que le moyen de détection (28) comprend un transducteur (28) pour suivre la position du moyen de montage (17).

8. Appareil selon l'une quelconque des revendications précédentes, caractérisé en ce que chaque moyen de détection (26, 27) est muni d'un détecteur ultrasonique (26, 27) contenant en son sein un transmetteur et un récepteur ultrasoniques.

9. Appareil selon l'une quelconque des revendications précédentes, caractérisé en ce que le moyen pour stocker les paramètres de référence des roues de référence stocke le profil en coupe transversale d'au moins une partie des roues de référence, et le moyen de calcul (60) comprend un moyen (60) pour calculer un profil de partie de la roue (9) et pour le comparer aux profils de référence pour déterminer au moins le rayon de l'emplacement de réception de contrepoids d'équilibre (15) de la roue (9) .

10. Appareil selon l'une quelconque des revendications 1 à 8, caractérisé en ce que chaque moyen de détection (26, 27) détecte la périphérie (30) d'une jante (31) d'un moyeu (10) de la roue (9), et le moyen de calcul (60) stocke les distances des surfaces (37) des parois latérales (12, 13) de la roue (9) par rapport aux valeurs correspondantes de rayons à des intervalles lors du déplacement du moyen de montage (17), et le moyen de calcul (60) comprend un moyen pour calculer le rayon ($R_2$) de la périphérie (30) de la jante (31) du moyeu (10) à partir des signaux reçus du moyen de détection (26, 27) et du moyen de détection (28), et un moyen (60) pour ajouter une distance prédéterminée ($R_0$) à la valeur calculée du rayon ($R_2$) de la périphérie (30) de la jante (31) pour déterminer le rayon ($R_1$) de l'emplacement de réception du contrepoids d'équilibre, et un moyen pour rechercher une valeur stockée d'une distance de la surface (37) de la roue ou de chaque paroi latérale (12, 13) de la roue (9) à partir du plan de référence (18), correspondant au rayon ($R_1$) de l'emplacement de réception du contrepoids d'équilibre.

11. Appareil selon l'une quelconque des revendications précédentes, caractérisé en ce que le rayon et la distance des emplacements de réception de contrepoids d'équilibre (15) de chaque côté de la roue (9) sont déterminés, le rayon de chaque emplacement de réception de contrepoids d'équilibre (15) étant le rayon ($R_1$) de la jante (15) du moyeu (10), et la distance de chaque emplacement de réception de contrepoids d'équilibre (15) étant la distance d'une surface (37) d'une paroi latérale respective (12, 13) du moyeu (10) adjacent à la jante (15) à partir du plan de référence (18).

12. Procédé pour déterminer le rayon d'un emplacement de réception de contrepoids d'équilibre (15) d'une roue (9) à partir de l'axe de rotation (7) de la roue (9) et pour déterminer la distance de l'emplacement de réception de contrepoids d'équilibre (15) à partir d'un plan de référence (18), en utilisant l'appareil (16), comme revendiqué dans l'une quelconque des revendications 1 à 11, à utiliser pour le calcul de la taille d'un contrepoids d'équilibre, le procédé comprenant les étapes suivantes :

déplacement du moyen de montage (17) de façon que les signaux du moyen de détection (26, 27) se déplacent sur au moins une partie des faces radiales (33, 34) de la roue (9), enregistrement et stockage des distances de la surface (37) de la partie de chaque face latérale radiale (33, 34) de la roue (9) à partir du plan de référence (18) par rapport aux positions correspondantes du moyen de montage (17) au niveau d'une pluralité de différentes positions du moyen de montage (17) à des intervalles lorsque le moyen de montage (17) est déplacé,

comparaison de certaines des valeurs stockées par rapport aux paramètres de référence des roues de référence pour déterminer le type de roue, et pour déterminer le rayon ($R_1$) de l'emplacement de réception de contrepoids d'équilibre (15) à partir des paramètres de référence,

détermination de la distance de l'emplacement (12, 13) par rapport au plan de référence (18) au moins à partir de certaines des valeurs stockées des signaux de sortie reçus en provenance du moyen de détection, et

calcul de la taille du contrepoids d'équilibre à partir de la distance radiale calculée ($R_1$) et de la distance ($x_1$, $y_1$) par rapport au plan de référence (18).

13. Procédé selon la revendication 12, caractérisé en ce que le procédé comprend le calcul d'un profil de section transversale d'au moins une partie de la roue (9) et comprend la comparaison du profil calculé aux profils de référence des roues de référence pour déterminer le type d'une roue (9), le profil calculé comprenant un profil d'une partie d'un moyeu de roue (10) adjacent à une périphérie de jante (30) du moyeu (10) de la roue (9), et le rayon de deux emplacements de réception de contrepoids d'équilibre (15) et la distance (12, 13) de deux emplacements de réception de contrepoids d'équilibre à partir du plan de référence (18) sont calculés.

14. Procédé selon la revendication 12, caractérisé en ce que le procédé comprend, de plus, l'étape de calcul du rayon ($R_2$) d'une périphérie (30) d'une jante de moyeu (31) de la roue (9) à partir des signaux reçus du moyen de détection (26, 27) et du moyen de détection (28) sur un ou sur les deux moyens de détection (26, 27) détectant une modification relativement grande de distance de la surface extérieure d'une face latérale radiale (33, 34) du moyeu (10) depuis le plan de référence (18), d'ajout d'une distance prédéterminée ($R_0$), correspondant à la différence entre le rayon de jante ($R_1$) du moyeu (10) et le rayon périphérique de jante ($R_2$), au rayon périphérique de jante ($R_2$) pour donner le rayon ($R_1$) de la jante de moyeu (15), de recherche des valeurs stockées des distances des surfaces des faces latérales radiales (33, 34) de la roue (9) à partir du plan de référence (18) correspondant à un rayon

($R_1$) de la paroi latérale (12, 13) adjacente à la jante de moyeu (15).

Fig. 1

Fig. 9

Fig.2

Fig.8

Fig. 3

Fig. 6

Fig. 5

Fig 7

Fig 4

Fig 10

Fig 12

Fig 13

Fig 11